(19) **Europäisches Patentamt**
**European Patent Office**
**Office européen des brevets**

(11) **EP 3 739 791 B1**

(12) **EUROPEAN PATENT SPECIFICATION**

(45) Date of publication and mention
of the grant of the patent:
**30.11.2022   Bulletin 2022/48**

(51) International Patent Classification (IPC):
**H04L 5/00** *(2006.01)*       **H04L 1/18** *(2006.01)*
**H04L 1/16** *(2006.01)*

(21) Application number: **18900116.7**

(22) Date of filing: **28.12.2018**

(52) Cooperative Patent Classification (CPC):
**H04L 1/1861; H04L 1/1607; H04L 1/1864**

(86) International application number:
**PCT/CN2018/124762**

(87) International publication number:
**WO 2019/137243 (18.07.2019 Gazette 2019/29)**

(54) **METHOD FOR GENERATING HYBRID AUTOMATIC REPEAT REQUEST CODEBOOK, USER EQUIPMENT, AND MEDIUM**

VERFAHREN ZUR ERZEUGUNG EINES HYBRID-AUTOMATIC-REPEAT-REQUEST-CODEBUCHS, BENUTZERGERÄT UND MEDIUM

PROCÉDÉ PERMETTANT DE GÉNÉRER UN LIVRE DE CODES DE DEMANDE DE RÉPÉTITION AUTOMATIQUE HYBRIDE, ÉQUIPEMENT UTILISATEUR ET SUPPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **12.01.2018   CN 201810033775**

(43) Date of publication of application:
**18.11.2020   Bulletin 2020/47**

(73) Proprietor: **Beijing Unisoc Communications Technology Co., Ltd.**
**Beijing 100083 (CN)**

(72) Inventors:
• **ZHANG, Sa**
**Shanghai 201203 (CN)**
• **ZHOU, Huan**
**Shanghai 201203 (CN)**

(74) Representative: **Stöckeler, Ferdinand et al**
**Schoppe, Zimmermann, Stöckeler Zinkler, Schenk & Partner mbB**
**Patentanwälte**
**Radlkoferstrasse 2**
**81373 München (DE)**

(56) References cited:
**WO-A1-2019/095202     CN-A- 106 788 918**
**CN-A- 107 483 160**

• **ZTE ET AL: "HARQ-ACK multiplexing and bundling", 3GPP DRAFT; R1-1717041 HARQ-ACK MULTIPLEXING AND BUNDLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, CZ; 20171009 - 20171013 8 October 2017 (2017-10-08), XP051340233, Retrieved from the Internet: URL:http://www.3gpp.org/ftp/Meetings_3GPP_ SYNC/RAN1/Docs/ [retrieved on 2017-10-08]**
• **FUJITSU: "RI-1800128: Clarification on Type-2 HARQ-ACK codebook determination in TS 38.213", 3GPP TSG RAN WG1 Meeting AH 1801, 12 January 2018 (2018-01-12), XP051384284,**
• **"3GPP TS 38.213 V15.0.0: 3rd Generation Partnership Project; Technical Specification Group Radio Access Network; NR; Physical layer procedures for control (Release 15)", 3rd Generation Partnership Project, 3 January 2018 (2018-01-03), pages 1-56, XP051392263,**

**Description**

TECHNICAL FIELD

The present disclosure generally relates to communication field, and more particularly, to a method for generating a hybrid automatic repeat request codebook, a user equipment and a medium.

BACKGROUND

In a Long Term Evolution (LTE) system and a New Radio (NR) system, a Hybrid Automatic Repeat request (HARQ) mechanism is supported. HARQ is a technology that combines Forward Error Correction (FEC) and Automatic Repeat reQuest (ARQ). FEC helps a receiver to correct errors by adding redundant information, thus reducing times of retransmission. For errors that FEC cannot correct, the receiver requests a sender to retransmit data through the ARQ mechanism. The receiver uses an error-detection code, usually a Cyclic Redundancy Check (CRC) check, to detect whether a received data packet is correctly decoded. If the data packet is correctly decoded, the receiver sends an acknowledgment (ACK) to the sender. After receiving the ACK, the sender will send a new data packet. If the data packet is not correctly decoded, the receiver sends a negative acknowledgment (NACK) to the sender. After receiving the NACK, the sender will retransmit the same data packet.

For the LTE system, the receiver performs HARQ feedback on each Transport Block (TB) using a single bit, that is, feeding back whether each TB is correctly decoded using a single bit. For the NR system, a size of a TB is increased significantly, and the number of code blocks (CBs) in each TB is several times larger compared with the LTE system. Therefore, multiple bits feedback per TB is introduced in NR to increase spectrum efficiency. CBs in one TB are divided into several Code Block Groups (CBGs) each of which includes one or more CBs, and HARQ feedback is performed on each CBG, that is, whether each CBG is correctly decoded is fed back by a single bit. When the CBG is not correctly decoded, the entire CBG will be retransmitted. Therefore, when some CBGs of a TB are incorrectly decoded, only the incorrectly decoded CBGs rather than the entire TB will be retransmitted.

However, in the existing method of performing CBG-based HARQ feedback, HARQ feedback of a TB is performed by using bits corresponding to the maximum value of numbers of CBGs configured for each TB across all the serving cells in a Physical Uplink Control CHannel (PUCCH) group. In case of the number of TBs per Physical Downlink Shared CHannel (PDSCH) is 2, the feedback bits are over dimensioned.

WO2019095202A1 (published after the relevant date of the present invention) discloses a method and apparatus for HARQ-ACK codebook determination.

A method of receiving information according to one embodiment comprises receiving, from a base unit, a first signal for indicating a first parameter which is a quantity of transport blocks (TBs) in a downlink association set and receiving a second signal for indicating a second parameter which is a quantity of hybrid automatic repeat request acknowledgement (HARQ-ACK) bit fields in a HARQ-ACK codebook, determining a size of the HARQ-ACK codebook based on the first signal and the second signal, and transmitting the HARQ-ACK codebook to the base unit, wherein the HARQ-ACK codebook comprises a first part including K1 HARQ-ACK bits and a second part including K2 HARQ-ACK bit fields, wherein each bit in the first part corresponds to one TB in the downlink association set; and each HARQ-ACK bit field in the second part corresponds to one incorrectly decoded TB in the downlink association set. The present application reduces signaling overhead for a HARQ-ACK codebook and avoids misunderstanding between a base unit and a remote unit when determining a HARQ-ACK codebook.

3GPP contribution R1-1717041 "Clarification on Type-2 HARQ-ACK codebook determination in TS38.213 discloses CBG and TB based HARQ-ACK for multiple PDSCHs."

SUMMARY

The invention is set out in the claims.

By embodiments of the present disclosure, bit overhead of HARQ feedback based on CBG may be reduced, and resource utilization may be improved.

According to the invention, a method for generating a HARQ codebook is provided according to claim 1.

According to the invention, a UE is provided, as provided in claim 7.

In an embodiment of the present disclosure, a UE including a memory and a processor is provided, according to claim 9.

Embodiments of the present disclosure may provide following advantages. To the serving cells which are configured with CBG-based HARQ feedback, the HARQ codebook corresponding to the PDSCHs is generated using N bits per PDSCH. N is a maximum value of numbers of CBGs corresponding to the PDSCHs rather than a maximum value of numbers of CBGs corresponding to the TBs. Therefore, the configured maximum value of the numbers of CBGs may not be too great to adapt numbers of different TBs. Bit overhead of the CBG-based HARQ feedback may be reduced, and resource utilization may be improved.

BRIEF DESCRIPTION OF THE DRAWINGS

Figure 1 schematically illustrates a diagram of a CBG in existing techniques;

Figure 2 schematically illustrates a flow chart of a method for generating a HARQ codebook;

Figure 3 schematically illustrates a structural diagram of a UE;

Figure 4 schematically illustrates a diagram of a HARQ codebook;

Figure 5 schematically illustrates a diagram of a HARQ codebook;

Figure 6 schematically illustrates a diagram of a HARQ codebook; and

Figure 7 schematically illustrates a diagram of a HARQ codebook; and

Figure 8 schematically illustrates a diagram of a HARQ codebook.

DETAILED DESCRIPTION

For the NR system, a size of a TB is increased significantly. Therefore, multiple bits feedback per TB is introduced in NR to increase spectrum efficiency. CBs in one TB are divided into several CBGs each of which includes one or more CBs, and HARQ feedback is performed on each CBG, that is, whether each CBG is correctly decoded is fed back by a single bit. When the CBG is not correctly decoded, the entire CBG will be retransmitted. Therefore, when some CBGs of a TB are incorrectly decoded, only the incorrectly decoded CBGs rather than the entire TB will be retransmitted.

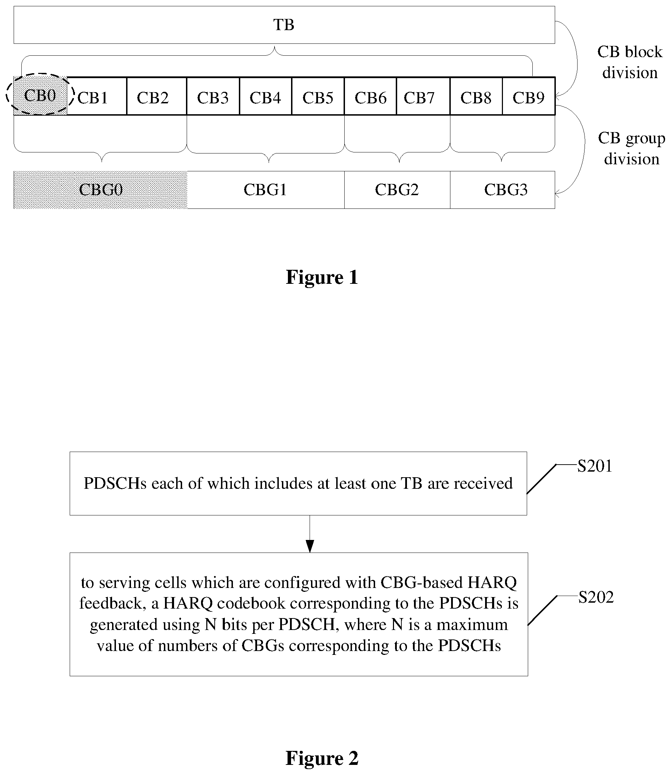

Figure 1 schematically illustrates a diagram of a CBG in existing techniques.

Referring to Figure 1, one TB includes ten CBs, which are CB0 to CB9. The ten CBs are divided into 4 CBGs including CBG0 to CGB3, where CBG0 includes CB0 to CB2, CBG1 includes CB3 to CB5, and CBG2 includes CB6 to CB7, and CBG3 includes CB8 to CB9.

If a HARQ codebook is fed back based on CBG, when CB0 is not correctly decoded and CB1 to CB9 are correctly decoded, a codebook bit corresponding to CBG0 is set to NACK as CB0 belongs to CBG0, and codebook bits corresponding to other CBGs are set to ACK. After receiving the HARQ codebook, the base station only retransmits CB0~CB2 belonging to CBG0 rather than the entire TB.

In the existing method of performing CBG-based HARQ feedback, HARQ feedback of a TB is performed by using bits corresponding to the maximum value of numbers of CBGs configured for each TB across all the serving cells in a PUCCH group. In case of the number of TBs per PDSCH is 2, the feedback bits are over dimensioned.

In the present disclosure, to serving cells which are configured with CBG-based HARQ feedback, a HARQ codebook corresponding to PDSCHs is generated using N bits per PDSCH. N is a maximum value of numbers of CBGs corresponding to PDSCHs rather than a maximum value of numbers of CBGs corresponding to the TBs. Therefore, a configured maximum value of numbers of CBGs may not be too great to adapt numbers of different TBs. Bit overhead of CBG-based HARQ feedback may be reduced, and resource utilization may be improved.

In order to clarify the object, solutions and advantages of embodiments of the present disclosure, embodiments of present disclosure will be described clearly in detail in conjunction with accompanying drawings.

Figure 2 schematically illustrates a flow chart of a method for generating a HARQ codebook. Referring to Figure 2, the method includes S201 and S202.

In S201, PDSCHs each of which includes at least one TB are received.

The PDSCHs may be received based on schedule information indicated by a Physical Downlink Control Channel (PDCCH).

The PDCCH may indicate the PDSCHs based on different DCI formats, such as DCI format 1_1 or DCT format 1_0 which can be referred to descriptions of DCI formats in existing protocols and is not described in detail here.

In S202, to serving cells which are configured with CBG-based HARQ feedback, a HARQ codebook corresponding to the PDSCHs is generated using N bits per PDSCH, where N is a maximum value of numbers of CBGs corresponding to the PDSCHs.

Different PDSCHs may be configured with different numbers of CBGs, and a maximum value among the different numbers of CBGs is the maximum value of numbers of CBGs corresponding to the PDSCHs.

The number of the serving cells which are configured with CBG-based HARQ feedback is one or more.

If the number of the serving cells which are configured with CBG-based HARQ feedback is more than one, and the HARQ codebook is configured as a dynamic HARQ codebook, N is max{$N_i$}, where i is an identifier of one of the serving cells which are configured with CBG-based HARQ feedback, $N_i$ is the maximum value of numbers of CBGs corresponding to the PDSCHs for the corresponding serving cell i, and max{} represents taking the maximum value.

According to 3GPP protocol, if parameter HARQ-ACK-codebook is dynamic, the HARQ codebook is configured as a dynamic HARQ codebook.

The method further includes: receiving a signaling from a base station, where the signaling includes the number of TBs in each of the PDSCHs in the serving cell i, for example, Number-MCS-HARQ-DL-DCI. If the number of TBs in each of the PDSCHs in the serving cell i is two, $N_i = 2 \times N_i^{TB}$; and if the number of TBs in each of the PDSCHs in the serving cell i is one,

$N_{\mathrm{i}} = N_{\mathrm{i}}^{\mathrm{TB}}$, where i is an identifier of one of the serving cells which are configured with CBG-based HARQ feedback, and $N_{\mathrm{i}}^{\mathrm{TB}}$ is a maximum value of numbers of CBGs corresponding to the TBs for the corresponding serving cell i.

Different TBs may be configured with different numbers of CBGs, and a maximum value among the different numbers of CBGs is the maximum value of numbers of CBGs corresponding to the TBs for the corresponding serving cell i.

If the DCI format corresponding to the PDSCHs is DCI format 1_1, generating the HARQ codebook corresponding to the PDSCHs using N bits per PDSCH may include: if the number of TBs in each of the PDSCHs is two, generating a first HARQ codebook corresponding to CBGs included in the first TB using first N/2 bits; and generating a second HARQ codebook corresponding to CBGs included in the second TB using remaining N/2 bits.

Generating the first HARQ codebook corresponding to CBGs included in the first TB using the first N/2 bits includes: if M1 is less than N/2, generating the first HARQ codebook corresponding to CBGs included in the first TB using first M1 bits among the first N/2 bits; and setting remaining (N/2-M1) bits to NACK, where M1 is the maximum value of the number of CBGs corresponding to the first TB.

Generating the second HARQ codebook corresponding to CBGs included in the second TB using the remaining N/2 bits includes: if M2 is less than N/2, generating the second HARQ codebook corresponding to CBGs included in the second TB using first M2 bits among the remaining N/2 bits; and setting the remaining (N/2-M2) bits to NACK, where M2 is the maximum value of the number of CBGs corresponding to the second TB.

If the DCI format corresponding to the PDSCHs is DCI format 1_1, generating the HARQ codebook corresponding to the PDSCHs using N bits per PDSCH may include: if the number of TBs in each of the PDSCHs is two and M1+M2<N, generating a first HARQ codebook corresponding to CBGs included in the first TB using first M1 bits; generating a second HARQ codebook corresponding to CBGs included in the second TB using M2 bits following the first M1 bits; and setting remaining (N-M1-M2) bits to NACK, where M1 is the maximum value of the number of CBGs corresponding to the first TB, and M2 is the maximum value of the number of CBGs corresponding to the second TB.

If the DCI format corresponding to the PDSCHs is DCI format 1_1, generating the HARQ codebook corresponding to the PDSCHs using N bits per PDSCH may include: if the number of TBs in each of the PDSCHs is one and M0<N, generating the HARQ codebook corresponding to CBGs included in the TB using first M0 bits; and setting remaining (N-MO) bits to NACK, where M0 is the maximum value of the number of CBGs corresponding to the TB.

If the DCI format corresponding to the PDSCHs is DCI format 1_0, generating the HARQ codebook corresponding to the PDSCHs using N bits per PDSCH includes: generating the HARQ codebook corresponding to the TB using a first bit; and setting remaining (N-1) bits to NACK.

The HARQ codebook indicates for the base station whether the TBs or the CBGs are correctly decoded. The HARQ codebook may be also called as other names with the same meaning, such as HARQ-ACK information or HARQ-ACK feedback, which also falls within the scope of the present disclosure.

When the UE adopts HARQ-ACK multiplexing, an RRC parameter HARQ-ACK-codebook is "dynamic", and there are multiple serving cells, i.e., carrier aggregation, to a serving cell C with an RRC parameter CBG-DL = ON (where C is an identifier of the serving cell), the base station configures, for the UE, the maximum value $N_{\mathrm{HARQ-ACK},c}^{\mathrm{CBG/TB,max}}$ (i.e., $N_{c}^{\mathrm{TB}}$) of the numbers of CBGs included in the TBs in the serving cell C by using an RRC parameter CBGs-per-TB-DL, where $N_{\mathrm{HARQ-ACK},c}^{\mathrm{CBG/PDSCH,max}}$ (i.e., $N_c$) is the maximum value of numbers of CBGs on the PDSCHs for the serving cell C. When an RRC parameter Number-MCS-HARQ-DL-DCI=2,

$$N_{\mathrm{HARQ-ACK},c}^{\mathrm{CBG/PDSCH,max}} = 2 \times N_{\mathrm{HARQ-ACK},c}^{\mathrm{CBG/TB,max}}$$ ; when the RRC parameter Number-MCS-HARQ-DL-DCI=1,

$$N_{\mathrm{HARQ-ACK},c}^{\mathrm{CBG/PDSCH,max}} = N_{\mathrm{HARQ-ACK},c}^{\mathrm{CBG/TB,max}},$$ where $N_{\mathrm{HARQ-ACK,max}}^{\mathrm{CBG/PDSCH,max}}$ (i.e., N) is a maximum value of $N_{\mathrm{HARQ-ACK},c}^{\mathrm{CBG/PDSCH,max}}$ of the serving cells with the parameter CBG-DL = ON. When the UE receives one PDSCH scheduled by a PDCCH or a Semi-Persistent Scheduling (SPS) deactivation indicated by a PDCCH, the UE uses $N_{\mathrm{HARQ-ACK,max}}^{\mathrm{CBG/PDSCH,max}}$ HARQ-ACK bits to feed back a CBG-level HARQ-ACK. The total codebook includes two sub-codebooks, where the first sub-codebook is a HARQ-ACK feedback of the cell with the RRC parameter CBG-DL=OFF, the second sub-codebook is a HARQ-ACK feedback of the cell with the RRC parameter CBG-DL=ON, and the second sub-codebook is located after the first sub-codebook.

For a cell with CBG-DL = ON,

when the UE receives a PDSCH scheduled in the DCI format 1_1 and the RRC parameter Number-MCS-HARQ-DL-DCI=2, first $N_{\mathrm{HARQ-ACK,max}}^{\mathrm{CBG/PDSCH,max}}/2$ bits may be used to indicate HARQ-ACK information of CBGs included in a first TB; if $N_{\text{HARQ-ACK},c}^{\text{CBG/TB0}}$ of CBGs included in the first TB is less than $N_{\text{HARQ-ACK,max}}^{\text{CBG/PDSCH,max}} / 2$, first $N_{\text{HARQ-ACK},c}^{\text{CBG/TB0}}$ bits feed back HARQ-ACK information of CBGs included in TB0, and remaining ( $N_{\text{HARQ-ACK,max}}^{\text{CBG/PDSCH,max}} / 2 - N_{\text{HARQ-ACK},c}^{\text{CBG/TB0}}$ ) bits are set to NACK; last $N_{\text{HARQ-ACK,max}}^{\text{CBG/PDSCH,max}} / 2$ bits may be used to indicate HARQ-ACK information of CBGs included in a second TB; if $N_{\text{HARQ-ACK},c}^{\text{CBG/TB1}}$ of CBGs included in the second TB is less than $N_{\text{HARQ-ACK,max}}^{\text{CBG/PDSCH,max}} / 2$, first $N_{\text{HARQ-ACK},c}^{\text{CBG/TB0}}$ bits feed back HARQ-ACK information of CBGs included in TB1, and remaining ( $N_{\text{HARQ-ACK,max}}^{\text{CBG/PDSCH,max}} / 2 - N_{\text{HARQ-ACK},c}^{\text{CBG/TB1}}$ ) bits are set to NACK;

when the UE receives a PDSCH scheduled in the DCI format 1_1 and the RRC parameter Number-MCS-HARQ-DL-DCI=2, first $N_{\text{HARQ-ACK},c}^{\text{CBG/TB}}$ bits may be used to indicate HARQ-ACK information of CBGs included in the first TB, $N_{\text{HARQ-ACK},c}^{\text{CBG/TB}}$ bits following the first $N_{\text{HARQ-ACK},c}^{\text{CBG/TB}}$ bits may be used to indicate HARQ-ACK information of CBGs included in the second TB, and if $2N_{\text{HARQ-ACK},c}^{\text{CBG/TB}} < N_{\text{HARQ-ACK,max}}^{\text{CBG/PDSCH,max}}$, remaining ( $N_{\text{HARQ-ACK,max}}^{\text{CBG/PDSCH,max}} - 2N_{\text{HARQ-ACK},c}^{\text{CBG/TB1}}$ ) bits are used to feed back NACK;

when the UE receives a PDSCH scheduled in DCI format 1_1 and the RRC parameter Number-MCS-HARQ-DL-DCI=1, first $N_{\text{HARQ-ACK,max}}^{\text{CBG/PDSCH,max}}$ bits may be used to indicate HARQ-ACK information of CBGs included in the first TB, $N_{\text{HARQ-ACK},c}^{\text{CBG/TB}}$ bits following the first $N_{\text{HARQ-ACK,max}}^{\text{CBG/PDSCH,max}}$ bits may be used to indicate HARQ-ACK information of CBGs included in the second TB, and if $2N_{\text{HARQ-ACK},c}^{\text{CBG/TB}} < N_{\text{HARQ-ACK,max}}^{\text{CBG/PDSCH,max}}$, remaining (

$N_{\text{HARQ-ACK,max}}^{\text{CBG/PDSCH,max}} - 2N_{\text{HARQ-ACK},c}^{\text{CBG/TB1}}$ ) bits are used to feed back NACK;

when the UE receives a PDSCH scheduled in the DCI format 1_1 and the RRC parameter Number-MCS-HARQ-DL-DCI=1, $N_{\text{HARQ-ACK,max}}^{\text{CBG/PDSCH,max}}$ bits may be used to indicate HARQ-ACK information of CBGs included in the TB of the PDSCH. If the number $N_{\text{HARQ-ACK},c}^{\text{CBG/TB0}}$ of CBGs included in the first TB is less than $N_{\text{HARQ-ACK,max}}^{\text{CBG/PDSCH,max}}$, first $N_{\text{HARQ-ACK},c}^{\text{CBG/TB0}}$ bits are used to indicate HARQ-ACK information of CBGs included in TB0, and remaining $N_{\text{HARQ-ACK,max}}^{\text{CBG/PDSCH,max}} - N_{\text{HARQ-ACK},c}^{\text{CBG/TB0}}$ bits are set to NACK;

when the UE receives a PDSCH scheduled in DCI format 1_0, a first bit is used to feed back HARQ-ACK information corresponding to the TB scheduled by the PDSCH, and remaining ( $N_{\text{HARQ-ACK,max}}^{\text{CBG/PDSCH,max}} - 1$ ) bits are set to NACK;

when the UE receives an SPS deactivation indicated in DCI format 1_0, the UE uses a first bit to generate one bit of HARQ-ACK information to be fed back to the PDCCH, where the first bit is ACK and remaining ( $N_{\text{HARQ-ACK,max}}^{\text{CBG/PDSCH,max}} - 1$ ) bits are NACK; and

if an SPS is activated, $N_{\text{SPS}}$ bits are added after a total codebook to correspond to the SPS for transmitting HARQ-ACK.

When the UE adopts HARQ-ACK multiplexing, an RRC parameter HARQ-ACK-codebook is "dynamic", and there are multiple serving cells, i.e., carrier aggregation, to a serving cell C with an RRC parameter CBG-DL = ON (where C is an identifier of the serving cell), the base station configures, for the UE, the maximum value $N_{\text{HARQ-ACK},c}^{\text{CBG/TB,max}}$ (i.e., $N_c^{\text{TB}}$ ) of the numbers of CBGs included in the TBs in the serving cell C by using an RRC parameter CBGs-per-TB-DL, where $N_{\text{HARQ-ACK},c}^{\text{CBG/PDSCH,max}}$ (i.e., $N_c$) is the maximum value of numbers of CBGs on the PDSCHs for the serving cell C. When an RRC parameter Number-MCS-HARQ-DL-DCI=2, $N_{\text{HARQ-ACK},c}^{\text{CBG/PDSCH,max}} = 2 \times N_{\text{HARQ-ACK},c}^{\text{CBG/TB,max}}$ ; when the RRC parameter Number-MCS-HARQ-DL-DCI=1,

$$N_{\text{HARQ-ACK},c}^{\text{CBG/PDSCH,max}} = N_{\text{HARQ-ACK},c}^{\text{CBG/TB,max}}, \quad \text{where}$$

$N_{\text{HARQ-ACK,max}}^{\text{CBG/PDSCH,max}}$ (i.e., N) is a maximum value of $N_{\text{HARQ-ACK},c}^{\text{CBG/PDSCH,max}}$ of the serving cells with the parameter CBG-DL = ON. When the UE receives one PDSCH scheduled by a PDCCH or an SPS deactivation indicated by a PDCCH, the UE uses $N_{\text{HARQ-ACK,max}}^{\text{CBG/PDSCH,max}}$ HARQ-ACK bits to feed back a CBG-level HARQ-ACK. The total codebook includes two sub-codebooks, where the first sub-codebook is a TB-level HARQ-ACK feedback of all cells, the second sub-codebook is a HARQ-ACK feedback of the cell with the RRC parameter CBG-DL=ON, and the second sub-codebook is located after the first sub-codebook.

For a cell with CBG-DL = ON,

when the UE receives a PDSCH scheduled in the DCI format 1_1 and the RRC parameter Number-MCS-HARQ-DL-DCI=2, first $N_{\text{HARQ-ACK,max}}^{\text{CBG/PDSCH,max}} / 2$ bits may be used to indicate HARQ-ACK information of CBGs included in a first TB; if $N_{\text{HARQ-ACK},c}^{\text{CBG/TB0}}$ of CBGs included in the first TB is less than $N_{\text{HARQ-ACK,max}}^{\text{CBG/PDSCH,max}} / 2$, the first $N_{\text{HARQ-ACK},c}^{\text{CBG/TB0}}$ bits feed back HARQ-ACK information of CBGs included in TB0, and remaining ($N_{\text{HARQ-ACK,max}}^{\text{CBG/PDSCH,max}} / 2 - N_{\text{HARQ-ACK},c}^{\text{CBG/TB0}}$) bits are set to NACK; last $N_{\text{HARQ-ACK,max}}^{\text{CBG/PDSCH,max}} / 2$ bits may be used to indicate HARQ-ACK information of CBGs included in a second TB; if $N_{\text{HARQ-ACK},c}^{\text{CBG/TB1}}$ of CBGs included in the second TB is less than $N_{\text{HARQ-ACK,max}}^{\text{CBG/PDSCH,max}} / 2$, first $N_{\text{HARQ-ACK},c}^{\text{CBG/TB0}}$ bits feed back HARQ-ACK information of CBGs included in TB1, and remaining ($N_{\text{HARQ-ACK,max}}^{\text{CBG/PDSCH,max}} / 2 - N_{\text{HARQ-ACK},c}^{\text{CBG/TB1}}$) bits are set to NACK;

when the UE receives a PDSCH scheduled in the DCI format 1_1 and the RRC parameter Number-MCS-HARQ-DL-DCI=2, first $N_{\text{HARQ-ACK},c}^{\text{CBG/TB}}$ bits may be used to indicate HARQ-ACK information of CBGs included in a first TB, $N_{\text{HARQ-ACK},c}^{\text{CBG/TB}}$ bits following

the first $N_{\text{HARQ-ACK},c}^{\text{CBG/TB}}$ bits may be used to indicate HARQ-ACK information of CBGs included in a second TB, and if $2N_{\text{HARQ-ACK},c}^{\text{CBG/TB}} < N_{\text{HARQ-ACK,max}}^{\text{CBG/PDSCH,max}}$, remaining ($N_{\text{HARQ-ACK,max}}^{\text{CBG/PDSCH,max}} - 2N_{\text{HARQ-ACK},c}^{\text{CBG/TB1}}$) bits are used to feed back NACK;

when the UE receives a PDSCH scheduled in the DCI format 1_1 and the RRC parameter Number-MCS-HARQ-DL-DCI=1, $N_{\text{HARQ-ACK,max}}^{\text{CBG/PDSCH,max}}$ bits may be used to indicate HARQ-ACK information of CBGs included in the TB of the PDSCH. If the number $N_{\text{HARQ-ACK},c}^{\text{CBG/TB0}}$ of CBGs included in the first TB is less than $N_{\text{HARQ-ACK,max}}^{\text{CBG/PDSCH,max}}$, first $N_{\text{HARQ-ACK},c}^{\text{CBG/TB0}}$ bits are used to indicate HARQ-ACK information of CBGs included in TB0, and remaining $N_{\text{HARQ-ACK,max}}^{\text{CBG/PDSCH,max}} - N_{\text{HARQ-ACK},c}^{\text{CBG/TB0}}$ bits are set to NACK;

when the UE receives a PDSCH scheduled in DCI format 1_0, only TB-level HARQ-ACK is fed back, and CBG-level HARQ-ACK is not fed back;

when the UE receives an SPS deactivation indicated in DCI format 1_0, only TB-level HARQ-ACK is fed back, and CBG-level HARQ-ACK is not fed back; and

if an SPS is activated, $N_{\text{SPS}}$ bits are added after a total codebook to correspond to the SPS for transmitting HARQ-ACK.

To TBs associated with SPS, a generating mode of the HARQ codebook for the TBs associated with SPS is determined based on related parameters, and the HARQ codebook for the TBs associated with SPS is generated based on the determined generating mode. In this way, HARQ feedback in an SPS scenario is realized.

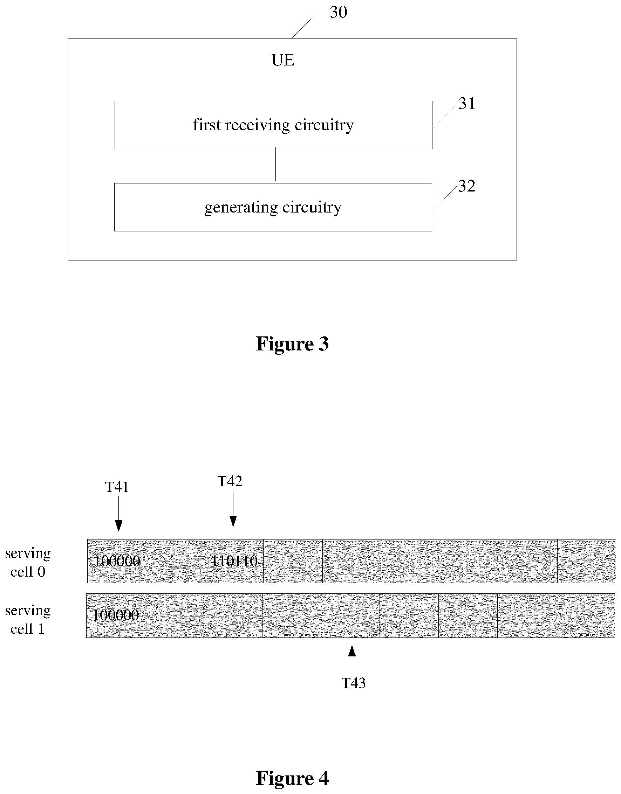

To make those skilled in the art better understand and implement solutions of the present disclosure, embodiments of the present disclosure provide a diagram of a HARQ codebook in Figure 4.

Referring to Figure 4, a UE is configured with two serving cells, and an RRC parameter HARQ-ACK-codebook is 'dynamic'. A primary serving cell has an ID (serial number) of 0 and an RRC parameter CBG-DL=ON. An RRC parameter CBGs-per-TB-DL configures that the maximum number $N_{\text{HARQ-ACK}}^{\text{CBG/TB,max}}$ of CBGs included in the TB of the primary serving cell is 2, RRC parameter Number-MCS-HARQ-DL-DCI=2, $N_{\text{HARQ-ACK,0}}^{\text{CBG/TB,max}} = 2$, $N_{\text{HARQ-ACK,0}}^{\text{CBG/PDSCH,max}} = 4$, and SPS is activated. A secondary serving cell has an ID of 1 and an RRC parameter CBG-DL=ON. An RRC parameter CBGs-per-TB-DL configures that the maximum number $N_{HARQ-ACK}^{CBG/TB,max}$ of CBGs included in the TB of the secondary serving cell is 6, RRC parameter Number-MCS-HARQ-DL-DCI=1, $N_{HARQ-ACK,0}^{CBG/TB,max}=6$, and $N_{HARQ-ACK,0}^{CBG/PDSCH,max}=6$.

When the UE receives one PDSCH scheduled by a PDCCH or an SPS deactivation indicated by a PDCCH, the UE uses $N_{HARQ-ACK,max}^{CBG/PDSCH,max}$ HARQ-ACK bits to feed back a CBG-level HARQ-ACK.

Specifically, in a slot T41, to the serving cell 0, if an SPS deactivation indicated by a PDCCH is received, and HARQ-ACK feedback time (feedback time) K1=4, i.e., four time slots, the generated codebook is 100000; to the serving cell 1, if a PDSCH scheduled with a format of DCI format 1_0 is received and decoded correctly, and feedback time K1=4, the generated codebook is 100000.

In a slot T42, to the serving cell 0, if a PDSCH scheduled with a format of DCI format 1_1 is received and two TBs are decoded correctly, and feedback time K1=2, the generated codebook is 110110.

In a slot T43 corresponding to a HARQ-ACK feedback time point, the total codebook fed back is 100000100000110110.

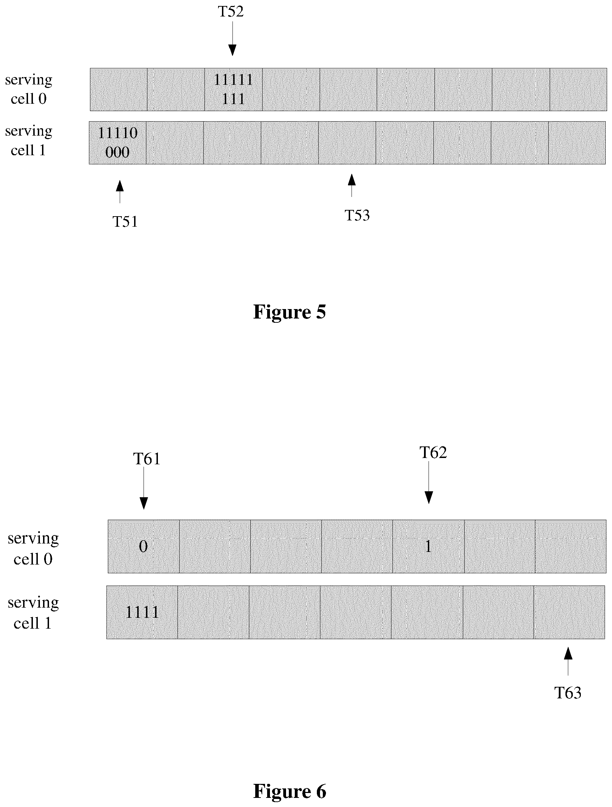

To make those skilled in the art better understand and implement solutions of the present disclosure, embodiments of the present disclosure provide a diagram of a HARQ codebook in Figure 5.

Referring to Figure 5, a UE is configured with two serving cells, and an RRC parameter HARQ-ACK-codebook is 'dynamic'. A primary serving cell has an ID (serial number) of 0 and an RRC parameter CBG-DL=ON. An RRC parameter CBGs-per-TB-DL configures that the maximum number $N_{HARQ-ACK}^{CBG/TB,max}$ of CBGs included in the TB of the primary serving cell is 4, RRC parameter Number-MCS-HARQ-DL-DCI=2, $N_{HARQ-ACK,0}^{CBG/TB,max}=4$, $N_{HARQ-ACK,0}^{CBG/PDSCH,max}=8$, and SPS is activated. A secondary serving cell has an ID of 1 and an RRC parameter CBG-DL=ON. An RRC parameter CBGs-per-TB-DL configures that the maximum number $N_{HARQ-ACK}^{CBG/TB,max}$ of CBGs included in the TB of the secondary serving cell is 4, RRC parameter Number-MCS-HARQ-DL-DCI=1, $N_{HARQ-ACK,0}^{CBG/TB,max}=4$, and $N_{HARQ-ACK,0}^{CBG/PDSCH,max}=4$.

When the UE receives one PDSCH scheduled by a PDCCH or an SPS deactivation indicated by a PDCCH, the UE uses $N_{HARQ-ACK,max}^{CBG/PDSCH,max}=8$ HARQ-ACK bits to feed back a CBG-level HARQ-ACK.

Specifically, in a slot T51, to the serving cell 1, if a PDSCH scheduled with a format of DCI format 1_1 is received and the TB is decoded correctly, and feedback time K1=4, the generated codebook is 11110000.

In a slot T52, to the serving cell 0, if a PDSCH scheduled with a format of DCI format 1_1 is received and two TBs are decoded correctly, and feedback time K1=2, the generated codebook is 11111111.

In a slot T53 corresponding to a HARQ-ACK feedback time point, the total codebook fed back is 1111000011111111.

To make those skilled in the art better understand and implement solutions of the present disclosure, embodiments of the present disclosure provide a diagram of a HARQ codebook in Figure 6.

Referring to Figure 6, a UE is configured with two serving cells, and an RRC parameter HARQ-ACK-codebook is 'dynamic'. A primary serving cell has an ID (serial number) of 0 and an RRC parameter CBG-DL=OFF, and SPS is activated. A secondary serving cell has an ID of 1 and an RRC parameter CBG-DL=ON. An RRC parameter CBGs-per-TB-DL configures that the maximum number $N_{HARQ-ACK}^{CBG/TB,max}$ of CBGs included in the TB of the secondary serving cell is 4, an RRC parameter Number-MCS-HARQ-DL-DCI=1, $N_{HARQ-ACK,0}^{CBG/TB,max}=4$, and $N_{HARQ-ACK,0}^{CBG/PDSCH,max}=4$.

The codebook generated by the UE is as follows.

Specifically, in a slot T61, to the serving cell 0, if a PDSCH of SPS is received and the TB is not decoded correctly, and feedback time K1=6, the generated codebook is 0; to the serving cell 1, if a PDSCH scheduled with a format of DCI format 1_1 is received and the TB is decoded correctly, and feedback time K1=6, the generated codebook is 1111.

In a slot T62, to the serving cell 0, if a PDSCH scheduled with DCI is received and the TB is decoded correctly, and feedback time K1=2, the generated codebook is 1.

In a slot T63 corresponding to a HARQ-ACK feedback time point, the total codebook fed back is 111110, where the sub-codebook 1 is 1, the sub-codebook 2 is 1111, and SPS codebook is 0.

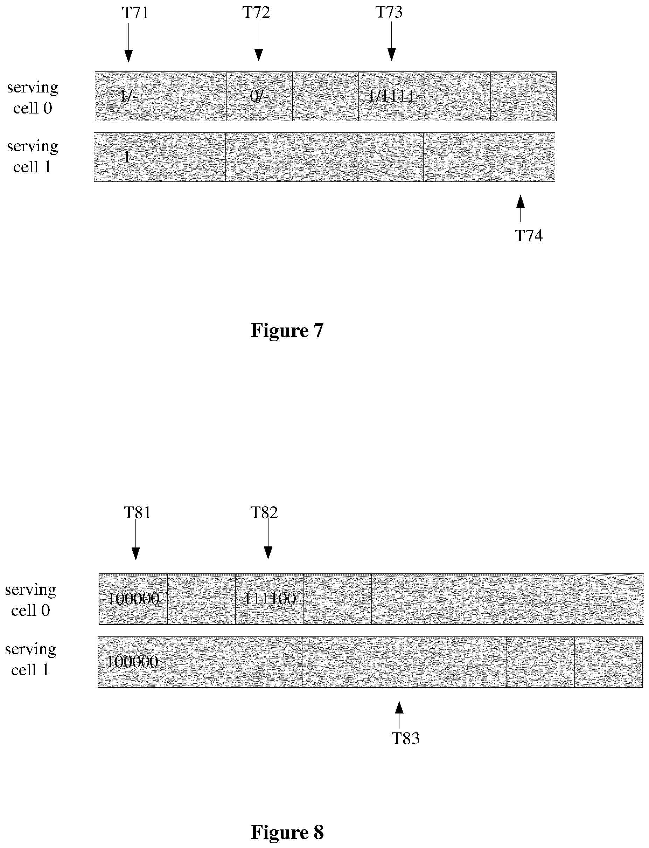

To make those skilled in the art better understand and implement solutions of the present disclosure, the present disclosure provide a diagram of a HARQ codebook in Figure 7.

Referring to Figure 7, a UE is configured with two serving cells, and an RRC parameter HARQ-ACK-codebook is 'dynamic'. A primary serving cell has an ID (serial number) of 0 and an RRC parameter CBG-DL=ON. An RRC parameter CBGs-per-TB-DL configures that the maximum number $N_{HARQ-ACK}^{CBG/TB,max}$ of CBGs included in the TB of the primary serving cell is 4, an RRC parameter Number-MCS-HARQ-DL-DCI=1, $N_{HARQ-ACK,0}^{CBG/TB,max}=4$ , $N_{HARQ-ACK,0}^{CBG/PDSCH,max}=4$ , and SPS is activated. A secondary serving cell has an ID of 1 and an RRC parameter CBG-DL=OFF.

The codebook generated by the UE is as follows.

Specifically, in a slot T71, to the serving cell 0, if an SPS deactivation indicated by a PDCCH is received, and feedback time K1=6, the generated codebook is 1; to the serving cell 1, if a PDSCH scheduled with a format of DCI format 1_1 is received and the TB is decoded correctly, and feedback time K1=6, the generated codebook is 1.

In a slot T72, to the serving cell 0, if a PDSCH scheduled with a format of DCI format 1_0 is received and the TB is not decoded correctly, and feedback time K1=4, the generated codebook is 0.

In a slot T73, to the serving cell 0, if a PDSCH scheduled with a format of DCI format 1_1 is received and the TB is decoded correctly, and feedback time K1=2, the generated codebook is 1/1111.

In a slot T74 corresponding to a HARQ-ACK feedback time point, the total codebook fed back is 11011111, where the sub-codebook 1 is 1101, and the sub-codebook 2 is 1111.

To make those skilled in the art better understand and implement solutions of the present disclosure, the present disclosure provides a diagram of a HARQ codebook in Figure 8.

Referring to Figure 8, a UE is configured with two serving cells, and an RRC parameter HARQ-ACK-codebook is 'dynamic'. A primary serving cell has an ID (serial number) of 0 and an RRC parameter CBG-DL=ON. An RRC parameter CBGs-per-TB-DL configures that the maximum number $N_{HARQ-ACK}^{CBG/TB,max}$ of CBGs included in the TB of the primary serving cell is 2, an RRC parameter Number-MCS-HARQ-DL-DCI=2, $N_{HARQ-ACK,0}^{CBG/PDSCH,max}=4$ , and SPS is activated. A secondary serving cell has an ID of 1 and an RRC parameter CBG-DL=ON. An RRC parameter CBGs-per-TB-DL configures that the maximum number $N_{HARQ-ACK}^{CBG/TB,max}$ of CBGs included in the TB of the secondary serving cell is 6, an RRC parameter Number-MCS-HARQ-DL-DCI=1, $N_{HARQ-ACK,0}^{CBG/TB,max}=6$ , and $N_{HARQ-ACK,0}^{CBG/PDSCH,max}=6$ .

When the UE receives one PDSCH scheduled by a PDCCH or an SPS deactivation indicated by a PDCCH, the UE uses $N_{HARQ-ACK,max}^{CBG/PDSCH,max}=6$ HARQ-ACK bits to feed back a CBG-level HARQ-ACK.

Specifically, in a slot T81, to the serving cell 0, if an SPS deactivation indicated by a PDCCH is received, and feedback time K1=4, the generated codebook is 100000; to the serving cell 1, if a PDSCH scheduled with a format of DCI format 1_0 is received and the TB is decoded correctly, and feedback time K1=4, the generated codebook is 100000.

In a slot T82, to the serving cell 0, if a PDSCH scheduled with a format of DCI format 1_1 is received and two TBs are decoded correctly, and feedback time K1=2, the generated codebook is 111100.

In a slot T83 corresponding to a HARQ-ACK feedback time point, the total codebook fed back is 100000100000111100.

To make those skilled in the art better understand and implement solutions of the present disclosure, the present disclosure further provides a UE capable of implementing the above method for generating the HARQ codebook, as shown in Figure 3.

Referring to Figure 3, the UE 30 includes a first receiving circuitry 31 and a generating circuitry 32.

The first receiving circuitry 31 is configured to receive PDSCHs each of which includes at least one TB.

The generating circuitry 32 is configured to: to serving cells which are configured with CBG-based HARQ feedback, generate a HARQ codebook corresponding to the PDSCHs using N bits per PDSCH, where N is a maximum value of numbers of CBGs corresponding to the PDSCHs.

If the number of the serving cells which are configured with CBG-based HARQ feedback is more than one, and the HARQ codebook is configured as a dynamic HARQ codebook, N is max$\{N_i\}$, where i is an identifier of the serving cell which are configured with CBG-based HARQ feedback, $N_i$ is the maximum value of numbers of CBGs corresponding to the PDSCHs for the corresponding serving cell i, and max$\{\}$ represents taking the maximum value.

The UE 30 further includes a second receiving circuitry (not shown) configured to receive a signaling from a base station, where the signaling includes the number of TBs in each of the PDSCHs in the serving cell i, for example, Number-MCS-HARQ-DL-DCI. If the number of TBs in each of the PDSCHs in the serving cell i is two, $N_i = 2 \times N_i^{TB}$ ; and if the number of TBs in each of the PDSCHs in the serving cell i is one, $N_i = N_i^{TB}$ , where i is an identifier of one of the serving cells which are configured with CBG-based HARQ feedback, and $N_i^{TB}$ is a maximum value of numbers of CBGs corresponding to the TBs for the corresponding serving cell i.

If a DCI format corresponding to the PDSCHs is DCI format 1_1, the generating circuitry 32 is configured to: if the number of TBs in each of the PDSCHs is two, generate a first HARQ codebook corresponding to CBGs included in the first TB using first N/2 bits; and generate a second HARQ codebook corresponding to CBGs included in the second TB using remaining N/2 bits.

The generating circuitry 32 is configured to: if M1 is less than N/2, generate the first HARQ codebook corresponding to CBGs included in the first TB using first M1 bits among the first N/2 bits; and set remaining (N/2-M1) bits to NACK, where M1 is the maximum value of the number of CBGs corresponding to the first TB.

The generating circuitry 32 is configured to: if M2 is less than N/2, generate the second HARQ codebook corresponding to CBGs included in the second TB using first M2 bits among the remaining N/2 bits; and set remaining (N/2-M2) bits to NACK, where M2 is the maximum value of the number of CBGs corresponding to the second TB.

If the DCI format corresponding to the PDSCHs is DCI format 1_1, the generating circuitry 32 is configured to: if the number of TBs in each of the PDSCHs is two and M1+M2<N, generate a first HARQ codebook corresponding to CBGs included in the first TB using first M1 bits; generate a second HARQ codebook corresponding to CBGs included in the second TB using M2 bits following the first M1 bits; and set remaining (N-M1-M2) bits to NACK, where M1 is the maximum value of the number of CBGs corresponding to the first TB, and M2 is the maximum value of the number of CBGs corresponding to the second TB.

If the DCI format corresponding to the PDSCHs is DCI format 1_1, the generating circuitry 32 is configured to: if the number of TBs in each of the PDSCHs is one and M0<N, generate the HARQ codebook corresponding to CBGs included in the TB using first M0 bits; and set remaining (N-MO) bits to NACK, where M0 is the maximum value of the number of CBGs corresponding to the TB.

If the DCI format corresponding to the PDSCHs is DCI format 1_0, the generating circuitry 32 is configured to: generate the HARQ codebook corresponding to the TB using a first bit; and set remaining (N-1) bits to NACK.

Operation procedures and principles of the UE 30 can be referred to the descriptions of the method for generating the HARQ codebook, and are not described in detail here.

In the present disclosure, a computer readable storage medium having computer instructions stored therein is provided, where once the computer instructions are executed, any one of the above methods for generating the HARQ codebook is performed. The computer readable storage medium is a non-volatile or non-transient storage medium.

In the present disclosure, a UE including a memory and a processor is provided, where the memory has computer instructions stored therein, and once the processor executes the computer instructions, any one of the above methods for generating the HARQ codebook is performed.

Those skilled in the art can understand that all of or a portion of the processes in the method provided can be implemented by related hardware with instruction of computer program. The computer program may be stored in a readable storage medium, such as a magnetic disk, an optical disk, a Read-Only Memory (ROM) or a Random Access Memory (RAM).

Although the present disclosure has been disclosed above with reference to preferred embodiments thereof, it should be understood that the disclosure is presented by way of example only, and not limitation.

**Claims**

1. A method for generating a Hybrid Automatic Repeat reQuest, HARQ, codebook, comprising:

   receiving (S201) Physical Downlink Shared Channels, PDSCHs, each of which comprises at least one Transport Block, TB; and to serving cells which are configured with Code Block Group CBG-based HARQ feedback, generating (S202) a HARQ codebook corresponding to the PDSCHs using N bits per PDSCH, wherein N is a maximum value of numbers of CBGs corresponding to the PDSCHs, wherein if the number of the serving cells which are configured with CBG-based HARQ feedback is more than one, and the HARQ codebook is configured as a dynamic HARQ codebook, N is max{$N_i$}, where i is an identifier of one of the serving cells which are configured with CBG-based HARQ feedback, $N_i$ is the maximum value of numbers of CBGs corresponding to the PDSCHs for the corresponding serving cell i, and max{} represents taking the maximum value, wherein the method further comprises: receiving a signaling from a base station, wherein the signaling comprises the number of TBs in each of the PDSCHs in the serving cell i; if the number of TBs in each of the PDSCHs in the serving cell i is two, $N_i = 2 \times N_i^{TB}$; and if the number of TBs in each of the PDSCHs in the serving cell i is one, $N_i = N_i^{TB}$, where i is an identifier of one of the serving cells which are configured with CBG-based HARQ feedback, and $N_i^{TB}$ is a maximum value of numbers of CBGs corresponding to the TBs for the corresponding serving cell I,

**characterized in that** if a Downlink Control Information DCI format corresponding to the PDSCHs is DCI format 1_0, generating the HARQ codebook corresponding to the PDSCHs using N bits per PDSCH comprises: generating the HARQ codebook corresponding to the TB using a first bit; and setting remaining (N-1) bits to NACK.

2. The method according to claim 1, wherein if a DCI format corresponding to the PDSCHs is DCI format 1_1, generating the HARQ codebook corresponding to the PDSCHs using N bits per PDSCH comprises:

   if the number of TBs in each of the PDSCHs is two, generating a first HARQ codebook corresponding to CBGs included in a first TB using first N/2 bits; and
   generating a second HARQ codebook corresponding to CBGs included in a second TB using remaining N/2 bits.

3. The method according to claim 2, wherein generating the first HARQ codebook corresponding to CBGs included in the first TB using the first N/2 bits comprises:
   if M1 is less than N/2, generating the first HARQ codebook corresponding to CBGs included in the first TB using first M1 bits among the first N/2 bits; and setting remaining (N/2-M1) bits to NACK, where M1 is the maximum value of the number of CBGs corresponding to the first TB.

4. The method according to claim 2, wherein generating the second HARQ codebook corresponding to CBGs included in the second TB using the remaining N/2 bits comprises:
   if M2 is less than N/2, generating the second HARQ codebook corresponding to CBGs included in the second TB using first M2 bits among the remaining N/2 bits; and setting remaining (N/2-M2) bits to NACK, where M2 is the maximum value of the number of CBGs corresponding to the second TB.

5. The method according to claim 1, wherein if a DCI format corresponding to the PDSCHs is DCI format 1_1, generating the HARQ codebook corresponding to the PDSCHs using N bits per PDSCH comprises: if the number of TBs in each of the PDSCHs is two and M1+M2<N, generating a first HARQ codebook corresponding to CBGs included in a first TB using first M1 bits; generating a second HARQ codebook corresponding to CBGs included in a second TB using M2 bits following the first M1 bits; and setting remaining (N-M1-M2) bits to NACK, where M1 is the maximum value of the number of CBGs corresponding to the first TB, and M2 is the maximum value of the number of CBGs corresponding to the second TB.

6. The method according to claim 1, wherein if a DCI format corresponding to the PDSCHs is DCI format 1_1, generating the HARQ codebook corresponding to the PDSCHs using N bits per PDSCH comprises: if the number of TBs in each of the PDSCHs is one and M0<N, generating the HARQ codebook corresponding to CBGs included in the TB using first M0 bits; and setting remaining (N-M0) bits to NACK, where M0 is the maximum value of the number of CBGs corresponding to the TB.

7. A User Equipment, UE (30), comprising:

   a first receiving circuitry (31), configured to receive Physical Downlink Shared Channels, PDSCHs, each of which comprises at least one Transport Block, TB; and
   a generating circuitry (32), configured to: to serving cells which are configured with Code Block Group CBG-based Hybrid Automatic Repeat reQuest, HARQ, feedback, generate a HARQ codebook corresponding to the PDSCHs using N bits per PDSCH, where N is a maximum value of numbers of CBGs corresponding to the PDSCHs,
   wherein if the number of the serving cells which are configured with CBG-based HARQ feedback is more than one, and the HARQ codebook is configured as a dynamic HARQ codebook, N is max $\{N_i\}$, where i is an identifier of one of the serving cells which are configured with CBG-based HARQ feedback, $N_i$ is the maximum value of numbers of CBGs corresponding to the PDSCHs for the corresponding serving cell i, and max{} represents taking the maximum value,
   wherein the UE (30) further comprises:

      a second receiving circuitry configured to receive a signaling from a base station, where the signaling comprises the number of TBs in each of the PDSCHs in the serving cell i; if the number of TBs in each of the PDSCHs in the serving cell i is two,

      $N_i = 2 \times N_i^{TB}$ ; and if the number of TBs in each of the PDSCHs in the serving cell i is one, $N_i = N_i^{TB}$ , where i is an identifier of one of the serving cells which are configured with CBG-based HARQ, and $N_i^{TB}$ is a maximum value of numbers of CBGs corresponding to the TBs for the corresponding serving cell i,
      **characterized in that** if a Downlink Control Information DCI format corresponding to the PDSCHs is DCI format 1_0, the generating circuitry (32) is configured to: generate the HARQ codebook corresponding to the TBs using a first bit; and set remaining (N-1) bits to NACK.

8. The UE (30) according to claim 7, wherein if a DCI format corresponding to the PDSCHs is DCI format 1_1, the generating circuitry (32) is configured to: if the number of TBs in each of the PDSCHs is one and M0<N, generate the HARQ codebook corresponding to CBGs included in the TB using first M0 bits; and set remaining (N-MO) bits to NACK, where M0 is the maximum value of the number of CBGs corresponding to the TB.

9. A computer readable storage medium having computer instructions stored therein, wherein once the computer instructions are executed, the method according to any one of claims 1 to 6 is performed.

**Patentansprüche**

1. Ein Verfahren zum Erzeugen eines Hybride-Automatische-Wiederholungsanfrage-, HARQ,-Codebuches, das folgende Schritte aufweist:

Empfangen (S201) von geteilten physikalischen Downlink-Kanälen, PDSCHs, von denen jeder zumindest einen Transportblock, TB, aufweist; und

für aktive Zellen, die mit Codeblockgruppen-, CBG,-basierter HARQ-Rückkopplung konfiguriert sind, Erzeugen (S202) eines HARQ-Codebuches entsprechend den PDSCHs unter Verwendung von N Bits pro PDSCH, wobei N ein Maximalwert von Anzahlen von CBGs entsprechend den PDSCHs ist, wobei dann, wenn die Anzahl von aktiven Zellen, die mit CBG-basierter HARQ-Rückkopplung konfiguriert sind, größer als eins ist und das HARQ-Codebuch als dynamisches HARQ-Codebuch konfiguriert ist, N gleich max$\{N_i\}$ ist, wobei i eine Kennung einer der aktiven Zellen ist, die mit CBG-basierter HARQ-Rückkopplung konfiguriert sind, $N_i$ der Maximalwert von Anzahlen von CBGs entsprechend den PDSCHs für die entsprechende aktive Zelle i ist, und max{} die Annahme des Maximalwerts darstellt, wobei das Verfahren ferner folgenden Schritt aufweist: Empfangen einer Signalisierung von einer Basisstation,

wobei die Signalisierung die Anzahl von TBs in jedem der PDSCHs in der aktiven Zelle i aufweist; wenn die Anzahl von TBs in jedem der PDSCHs in der aktiven Zelle i gleich zwei ist, dann ist $N_i = 2 \times N_i^{\mathrm{TB}}$ ; und wenn die Anzahl von TBs in jedem der PDSCHs in der aktiven Zelle i gleich eins ist, dann ist $N_i = N_i^{\mathrm{TB}}$ , wobei i eine Kennung einer der aktiven Zellen ist, die mit CBG-basierter HARQ-Rückkopplung konfiguriert sind, und $N_i^{\mathrm{TB}}$ ein Maximalwert von Anzahlen von CBGs ist entsprechend den TBs für die entsprechende aktive Zelle i ist,

**dadurch gekennzeichnet, dass** dann, wenn das Downlink-Steuerinformationen-,DCI,-Format entsprechend den PDSCHs ein DCI-Format 1_0 ist, das Erzeugen des HARQ-Codebuches entsprechend den PDSCHs unter Verwendung von N Bits pro PDSCH Folgendes aufweist: Erzeugen des HARQ-Codebuches entsprechend dem TB unter Verwendung eines ersten Bits; und Einstellen von verbleibenden (N-1) Bits auf NACK.

2. Das Verfahren gemäß Anspruch 1, wobei dann, wenn ein DCI-Format entsprechend den PDSCHs ein DCI-Format 1_1 ist, das Erzeugen des HARQ-Codebuches entsprechend den PDSCHs unter Verwendung von N Bits pro PDSCH Folgendes aufweist:

wenn die Anzahl von TBs in jedem der PDSCHs zwei ist, Erzeugen eines ersten HARQ-Codebuches entsprechend CBGs, die in einem ersten TB enthalten sind, unter Verwendung von ersten N/2 Bits; und Erzeugen eines zweiten HARQ-Codebuches entsprechend CBGs, die in einem zweiten TB enthalten sind, unter Verwendung von verbleibenden N/2 Bits.

3. Das Verfahren gemäß Anspruch 2, wobei das Erzeugen des ersten HARQ-Codebuches entsprechend CBGs, die in dem ersten TB enthalten sind, unter Verwendung der ersten N/2 Bits Folgendes aufweist:
wenn M1 kleiner als N/2 ist, Erzeugen des ersten HARQ-Codebuches entsprechend CBGs, die in dem ersten TB enthalten sind, unter Verwendung von ersten M1 Bits aus den ersten N/2 Bits; und Einstellen von verbleibenden (N/2-M1) Bits auf NACK, wobei M1 der Maximalwert der Anzahl von CBGs entsprechend dem ersten TB ist.

4. Das Verfahren gemäß Anspruch 2, wobei das Erzeugen des zweiten HARQ-Codebuches entsprechend CBGs, die in dem zweiten TB enthalten sind, unter Verwendung der verbleibenden N/2 Bits Folgendes aufweist:

wenn M2 kleiner als N/2 ist, Erzeugen des zweiten HARQ-Codebuches entsprechend CBGs, die in dem zweiten TB enthalten sind, unter Verwendung erster M2 Bits aus den verbleibenden N/2 Bits; und Einstellen von verbleibenden (N/2-M2) Bits auf NACK, wobei M2 der Maximalwert der Anzahl von CBGs entsprechend dem zweiten TB ist.

5. Das Verfahren gemäß Anspruch 1, wobei dann, wenn ein DCI-Format entsprechend den PDSCHs ein DCI-Format 1_1 ist, das Erzeugen des HARQ-Codebuches entsprechend den PDSCHs unter Verwendung von N Bits pro PDSCH Folgendes aufweist:

wenn die Anzahl von TBs in jedem der PDSCHs zwei ist und M1+M2<N ist, Erzeugen eines ersten HARQ-Codebuches entsprechend CBGs, die in dem ersten TB enthalten sind, unter Verwendung von ersten M1 Bits; Erzeugen eines zweiten HARQ-Codebuches entsprechend CBGs, die in einem zweiten TB enthalten sind, unter Verwendung von M2 Bits, die auf die ersten M1 Bits folgen; und Einstellen von verbleibenden (N-M1-M2) Bits auf NACK, wobei M1 der Maximalwert der Anzahl von CBGs entsprechend dem ersten TB ist, und M2 der Maximalwert der Anzahl von CBGs entsprechend dem zweiten TB ist.

6. Das Verfahren gemäß Anspruch 1, wobei dann, wenn ein DCI-Format entsprechend den PDSCHs ein DCI-Format 1_1 ist, das Erzeugen des HARQ-Codebuches entsprechend den PDSCHs unter Verwendung von N Bits pro PDSCH Folgendes aufweist:

wenn die Anzahl von TBs in jedem der PDSCHs eins ist und M0<N ist, Erzeugen des HARQ-Codebuches entsprechend CBGs, die in dem TB enthalten sind, unter Verwendung von ersten M0 Bits; und Einstellen von verbleibenden (N-MO) Bits auf NACK, wobei M0 der Maximalwert der Anzahl von CBGs entsprechend dem TB ist.

7. Ein Benutzergerät, UE (30), das folgende Merkmale aufweist:

eine erste Empfangsschaltung (31), die konfiguriert ist zum Empfangen von geteilten physikalischen Downlink-Kanälen, PDSCHs, von denen jeder zumindest einen Transportblock, TB, aufweist; und
eine Erzeugungsschaltung (32), die konfiguriert ist, für aktive Zellen, die mit Codeblockgruppen-, CBG,-basierter Hybride-Automatische-Wiederholungsanfrage-, HARQ,-Rückkopplung konfiguriert sind, zum Erzeugen eines HARQ-Codebuches entsprechend den PDSCHs unter Verwendung von N Bits pro PDSCH, wobei N ein Maximalwert von Anzahlen von CBGs entsprechend den PDSCHs ist,
wobei dann, wenn die Anzahl von aktiven Zellen, die mit CBG-basierter HARQ-Rückkopplung konfiguriert sind, größer als eins ist und das HARQ-Codebuch als dynamisches HARQ-Codebuch konfiguriert ist, N gleich max $\{N_i\}$ ist, wobei i eine Kennung einer der aktiven Zellen ist, die mit CBG-basierter HARQ-Rückkopplung konfiguriert sind, $N_i$ der Maximalwert von Anzahlen von CBGs entsprechend den PDSCHs für die entsprechende aktive Zelle i ist, und max{} die Annahme des Maximalwerts darstellt,
wobei die UE (30) ferner folgendes Aufweist:

eine zweite Empfangsschaltung, die konfiguriert ist zum Empfangen einer Signalisierung von einer Basisstation,
wobei die Signalisierung die Anzahl von TBs in jedem der PDSCHs in der aktiven Zelle i aufweist; wenn die Anzahl von TBs in jedem der PDSCHs in der aktiven Zelle i gleich zwei ist, dann ist $N_i = 2 \times N_i^{TB}$ ; und wenn die Anzahl von TBs in jedem der PDSCHs in der aktiven Zelle i gleich eins ist, dann ist $N_i = N_i^{TB}$ , wobei i eine Kennung einer der aktiven Zellen ist, die mit CBG-basierter HARQ-Rückkopplung konfiguriert sind, und $N_i^{TB}$ ein Maximalwert von Anzahlen von CBGs ist entsprechend den TBs für die entsprechende aktive Zelle i ist, **dadurch gekennzeichnet, dass** dann, wenn das Downlink-Steuerinformationen-, DCI,-Format entsprechend den PDSCHs ein DCI-Format 1_0 ist, die Erzeugungsschaltung (32) konfiguriert ist zum: Erzeugen des HARQ-Codebuches entsprechend den TBs unter Verwendung eines ersten Bits; und Einstellen von verbleibenden (N-1) Bits auf NACK.

8. Das UE (30) gemäß Anspruch 7, wobei dann, wenn ein DCI-Format entsprechend den PDSCHs ein DCI-Format 1_1 ist, die Erzeugungsschaltung (32) konfiguriert ist:

wenn die Anzahl von TBs in jedem der PDSCHs eins ist und M0<N ist, Erzeugen des HARQ-Codebuches entsprechend CBGs, die in dem TB enthalten sind, unter Verwendung von ersten M0 Bits; und Einstellen von verbleibenden (N-MO) Bits auf NACK, wobei M0 der Maximalwert der Anzahl von CBGs entsprechend dem TB ist.

9. Ein computerlesbares Speichermedium, auf dem Computeranweisungen gespeichert sind, wobei dann, wenn die Computeranweisungen ausgeführt werden, das Verfahren gemäß einem der Ansprüche 1 bis 6 durchgeführt wird.

## Revendications

1. Procédé permettant de générer un livre de codes de Demande de Répétition Automatique Hybride, HARQ, comprenant le fait de:

   recevoir (S201) des Canaux Partagés de Liaison Descendante Physiques, PDSCH, qui comprennent, chacun, au moins un Bloc de Transport, TB; et
   vers les cellules de desserte qui sont configurées avec une rétroaction de HARQ à base du Groupe de Blocs de Code, CBG, générer (S202) un livre de code de HARQ correspondant aux PDSCH à l'aide de N bits par PDSCH, où N est une valeur maximale de nombres de CBG correspondant aux PDSCH,
   dans lequel, si le nombre de cellules de desserte qui sont configurées avec une rétroaction de HARQ à base du CBG est supérieur à un, et que le livre de codes HARQ est configuré comme un livre de codes de HARQ dynamique, N est max$\{N_i\}$, où i est un identificateur de l'une des cellules de desserte qui sont configurées avec une rétroaction de HARQ à base du CBG, $N_i$ est la valeur maximale de nombres de CBG correspondant aux PDSCH pour la cellule de desserte correspondante i, et max$\{\}$ représente le fait d'adopter la valeur maximale,
   dans lequel le procédé comprend par ailleurs le fait de: recevoir une signalisation d'une station de base,
   dans lequel la signalisation comprend le nombre de TB dans chacun des PDSCH dans la cellule de desserte i; si le nombre de TB dans chacun des PDSCH dans la cellule de desserte i est deux, $N_i = 2 x N_i^{TB}$ ; et si le nombre de TB dans chacun des PDSCH dans la cellule de desserte i est un, $N_i = N_i^{TB}$ , où i est un identificateur de l'une des cellules de desserte qui sont configurées avec une rétroaction de HARQ à base du CBG, et $N_i^{TB}$ est une valeur maximale de nombres de CBG correspondant aux TB pour la cellule de desserte I correspondante,
   **caractérisé par le fait que**, si un format d'Informations de Commande de Liaison Descendante DCI correspondant aux PDSCH est le format de DCI 1_0, la génération du livre de codes de HARQ correspondant aux PDSCH à l'aide de N bits par PDSCH comprend le fait de: générer le livre de codes de HARQ correspondant au TB à l'aide d'un premier bit; et régler les (N-1) bits restants à NACK.

2. Procédé selon la revendication 1, dans lequel, si un format de DCI correspondant aux PDSCH est le format de DCI 1_1, la génération du livre de codes de HARQ correspondant aux PDSCH à l'aide de N bits par PDSCH comprend le fait de:

   si le nombre de TB dans chacun des PDSCH est deux, générer un premier livre de codes de HARQ correspondant aux CBG inclus dans un premier TB à l'aide des N/2 premiers bits; et générer un deuxième livre de codes de HARQ correspondant aux CBG inclus dans un deuxième TB à l'aide des N/2 bits restants.

3. Procédé selon la revendication 2, dans lequel la génération du premier livre de codes de HARQ correspondant aux CBG inclus dans le premier TB à l'aide des premiers N/2 bits comprend le fait de:
   si M1 est inférieur à N/2, générer le premier livre de codes de HARQ correspondant aux CBG inclus dans le premier TB à l'aide des premiers M1 bits parmi les premiers N/2 bits; et régler les (N/2-M1) bits restants à NACK, où M1 est la valeur maximale du nombre de CBG correspondant au premier TB.

4. Procédé selon la revendication 2, dans lequel la génération du deuxième livre de codes de HARQ correspondant aux CBG inclus dans le deuxième TB à l'aide des N/2 bits restants comprend le fait de:
   si M2 est inférieur à N/2, générer le deuxième livre de codes de HARQ correspondant aux CBG inclus dans le deuxième TB à l'aide des premiers M2 bits parmi les N/2 bits restants; et régler les (N/2-M2) bits restants à NACK, où M2 est la valeur maximale du nombre de CBG correspondant au deuxième TB.

5. Procédé selon la revendication 1, dans lequel, si un format de DCI correspondant aux PDSCH est le format de DCI 1_1, la génération du livre de codes de HARQ correspondant aux PDSCH à l'aide de N bits par PDSCH comprend le fait de:
   si le nombre de TB dans chacun des PDSCH est deux et que M1+M2<N, générer un premier livre de codes de HARQ correspondant aux CBG inclus dans un premier TB à l'aide des premiers M1 bits; générer un deuxième livre de codes de HARQ correspondant aux CBG inclus dans un deuxième TB à l'aide M2 bits suivant les premiers M1 bits; et régler les (N-M1-M2) bits restants à NACK, où M1 est la valeur maximale du nombre de CBG correspondant au premier TB, et M2 est la valeur maximale du nombre de CBG correspondant au deuxième TB.

**6.** Procédé selon la revendication 1, dans lequel, si un format de DCI correspondant aux PDSCH est le format de DCI 1_1, la génération du livre de codes de HARQ correspondant aux PDSCH à l'aide de N bits par PDSCH comprend le fait de:

si le nombre de TB dans chacun des PDSCH est un et que M0<N, générer le livre de codes de HARQ correspondant aux CBG inclus dans le TB à l'aide des premiers M0 bits; et régler les (N-MO) bits restants à NACK, où M0 est la valeur maximale du nombre de CBG correspondant au TB.

**7.** Equipement d'utilisateur, UE (30), comprenant:

un premier circuit de réception (31), configuré pour recevoir des Canaux Partagés de Liaison Descendante Physiques, PDSCH, qui comprennent, chacun, au moins un Bloc de Transport, TB; et

un circuit de génération (32), configuré pour: vers les cellules de desserte qui sont configurées avec une rétroaction de Demande de Répétition Automatique Hybride, HARQ, à base du Groupe de Blocs de Codes, CBG, générer un livre de codes de HARQ correspondant aux PDSCH à l'aide de N bits par PDSCH, où N est un valeur maximale de nombres de CBG correspondant aux PDSCH,

dans lequel, si le nombre de cellules de desserte qui sont configurées avec une rétroaction de HARQ à base du CBG est supérieur à un, et que le livre de codes de HARQ est configuré comme un livre de codes de HARQ dynamique, N est max{$N_i$}, où i est un identificateur de l'une des cellules de desserte qui sont configurées avec une rétroaction de HARQ à base du CBG, $N_i$ est la valeur maximale de nombres de CBG correspondant aux PDSCH pour la cellule de desserte correspondante i, et max{} représente le fait d'adopter la valeur maximale,

dans lequel l'UE (30) comprend par ailleurs:

un deuxième circuit de réception configuré pour recevoir une signalisation d'une station de base,

dans lequel la signalisation comprend le nombre de TB dans chacun des PDSCH dans la cellule de desserte i; si le nombre de TB dans chacun des PDSCH dans la cellule de desserte i est deux, $N_i = 2xN_i^{TB}$ ; et si le nombre de TB dans chacun des PDSCH dans la cellule de desserte i est un, $N_i = N_i^{TB}$ , où i est un identificateur de l'une des cellules de desserte qui sont configurées avec HARQ à base du CBG, et

$N_i^{TB}$ est une valeur maximale de nombres de CBG correspondant aux TB pour la cellule de desserte i correspondante,

**caractérisé par le fait que**, si un format d'Informations de Commande de Liaison Descendante DCI correspondant aux PDSCH est le format de DCI 1_0, le circuit de génération (32) est configuré pour: générer le livre de code de HARQ correspondant aux TB à l'aide d'un premier bit; et régler les (N-1) bits restants à NACK.

**8.** UE (30) selon la revendication 7, dans lequel, si un format de DCI correspondant aux PDSCH est le format de DCI 1_1, le circuit de génération (32) est configuré pour:

si le nombre de TB dans chacun des PDSCH est un et que M0<N, générer le livre de codes de HARQ correspondant aux CBG inclus dans le TB à l'aide des premiers M0 bits; et régler les (N-MO) bits restants à NACK, où M0 est la valeur maximale du nombre de CBG correspondant au TB.

**9.** Support de mémoire lisible par ordinateur présentant, y mémorisées, des instructions d'ordinateur, dans lequel est réalisé, lorsque les instructions d'ordinateur sont exécutées, le procédé selon l'une quelconque des revendications 1 à 6.

TB

CB block
division

| CB0 | CB1 | CB2 | CB3 | CB4 | CB5 | CB6 | CB7 | CB8 | CB9 |

CB group
division

| CBG0 | CBG1 | CBG2 | CBG3 |

**Figure 1**

PDSCHs each of which includes at least one TB are received — S201

to serving cells which are configured with CBG-based HARQ feedback, a HARQ codebook corresponding to the PDSCHs is generated using N bits per PDSCH, where N is a maximum value of numbers of CBGs corresponding to the PDSCHs — S202

**Figure 2**

30

UE

first receiving circuitry 31

generating circuitry 32

**Figure 3**

T41    T42

serving cell 0    | 100000 | | 110110 | | | | | | | |

serving cell 1    | 100000 | | | | | | | | | |

T43

**Figure 4**

**Figure 5**

**Figure 6**

**Figure 7**

**Figure 8**

**EP 3 739 791 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019095202 A1

**Non-patent literature cited in the description**

- Clarification on Type-2 HARQ-ACK codebook determination in TS38.213 discloses CBG and TB based HARQ-ACK for multiple PDSCHs. *R1-1717041*